# EUROPÄISCHE PATENTSCHRIFT

(11) **EP 1 108 259 B1**
(45) Veröffentlichungstag und Bekanntmachung des Hinweises auf die Patenterteilung: **26.02.2003**
(21) Anmeldenummer: 99952290.7
(22) Anmeldetag: 09.08.1999
(51) Int. Cl.: H01B 1/24, C08K 7/06, H01M 8/02, H01M 4/96

(54) **ELEKTRISCH LEITFÄHIGES SCHICHTMATERIAL**
ELECTRICALLY CONDUCTIVE LAYER MATERIAL
MATERIAU STRATIFIE ELECTROCONDUCTEUR

(30) Priorität: 11.08.1998 DE 19836267
(43) Veröffentlichungstag der Anmeldung: 20.06.2001
(73) Patentinhaber: Manhattan Scientifics, Inc., New York, NY 10022 (US)
(72) Erfinder: ROSENMAYER, Gunther, D-83416 Saaldorf-Surheim (DE)
(74) Vertreter: Riederer Freiherr von Paar zu Schönau, Anton
(86) Internationale Anmeldenummer: DE9902432
(87) Internationale Veröffentlichungsnummer: WO00010174

(56) Entgegenhaltungen:
- US-A- 5 696 198
- DATABASE WPI Section Ch, Week 199344 Derwent Publications Ltd., London, GB; Class A85, AN 1993-348252 XP002128931 & JP 05 254957 A (LINTEK KK), 5. Oktober 1993 (1993-10-05)
- DATABASE WPI Section Ch, Week 198829 Derwent Publications Ltd., London, GB; Class A21, AN 1988-203059 XP002128932 & JP 63 142085 A (SHOWA DENKO KK), 14. Juni 1988 (1988-06-14)
- DATABASE WPI Section Ch, Week 197729 Derwent Publications Ltd., London, GB; Class J03, AN 1977-51042Y XP002128933 & JP 52 067737 A (OUVAL KIKIKOGYO KK), 4. Juni 1977 (1977-06-04)

## Beschreibung

Die Erfindung betrifft ein elektrisch sehr gut leitfähiges Schichtmaterial aus einem Kohlenstoff-Verbundwerkstoff. Das Material besitzt gute mechanische Festigkeit und hohes Elastizitätsmodul bei geringer Dichte und ist zudem hochflexibel. Die Schicht kann gasdicht oder porös hergestellt werden. Eine Strukturierung der Oberflächen ist möglich.

Bekannt sind leitfähige, nichtmetallische Schichtmaterialien zur Verwendung als Ableiter für elektrostatische Ladung, als Abschirmung von elektromagnetischen Störungen, als Widerstandsmaterial für elektrische Heizmatten und als Separatoren und Bipolarplatten in elektrochemischen Anwendungen, insbesondere Brennstoffzellen. Die wesentlichen Vorteile dieser Materialien gegenüber der Verwendung von Metallen sind deren geringes Gewicht, und die hohe Beständigkeit gegenüber chemisch aggressiven Medien. Gewünscht wird meist ein geringer elektrischer Widerstand und hohe mechanische Festigkeit.

Im Stand der Technik sind Kohlenstoff-Verbundwerkstoffe beschrieben, die aus mit Leitruß oder Graphit compoundierten Thermoplasten oder Harzen bestehen. Ein derartiger Verbundwerkstoff ist z.B. in DE 3135430 C2 offengelegt. Diese Materialien weisen eine geringe elektrische Leitfähigkeit auf, da beim intensiven Mischen des in flüssiger Form vorliegenden Binders die elektrisch leitfähigen Kohlenstoffpartikel vom Binder zum Teil umhüllt werden. Der elektrische Kontakt der leitfähigen Partikel geht damit teilweise verloren.
DE 4234688 C2 hingegen legt ein sehr gut leitfähiges Verbundmaterial offen, welches ebenfalls durch compoundieren mit wärmehärtbaren Harzen gefertigt wird. Allerdings dient hier eine Graphit-Interkalationsverbindung als leitfähige Substanz, die durch Dotierung von faserartigen Kohlenstoffpartikeln mit Halogenen oder Alkalimetallen hergestellt wird. Die Kohlenstoffpartikel werden zuvor mittels eines katalysierten Crackverfahres aus der Gasphase abgeschieden und anschließend bei 2400°C graphitiert. Das Verfahren ist insgesamt sehr aufwendig und zudem ist die Beständigkeit der Interkalationsverbindung für die elektrochemische Anwendung, z.B. in Polymer-Elektrolyt-Membran (PEM)-Brennstoffzellen nicht gesichert.

US 4,643,956 beschreibt eine Separatorplatte, die zunächst aus Harz und Kokspartikeln geformt und anschließend mittels eines kostenintensiven, mehrstufigen Graphitierungsprozesses bis nahe 3000°C fertiggestellt wird. Die Platten sind sehr gut leitfähig und chemisch stabil. Sie zeigen aber aufgrund des fehlenden Polymeranteils einen erheblichen Grad an Sprödigkeit.

Mit der vorliegenden Erfindung können alle oben aufgeführten Nachteile vermieden werden.

Aufgabe der Erfindung ist es, ein kostengünstiges, hochflexibles und sehr gut elektrisch leitfähiges Schichtmaterial aus Kohlenstoff-Verbundwerstoff bereitzustellen. Das Schichtmaterial kann gasdicht oder porös sein.
Weiterhin ist es Aufgabe der Erfindung, ein einfaches, kostengünstiges Verfahren zur Herstellung dieses Schichtmaterials aufzuzeigen.
Darüberhinaus ist es Aufgabe der Erfindung, die Verwendung dieses Schichtmaterials als bipolare Separatoren in PEM-Brennstoffzellen und als mechanische Verstärkung von Gasdiffusionselektroden darzustellen.

Die Lösung dieser Aufgaben bietet das Schichtmaterial aus Kohlenstoff Verbundwerkstoff von Anspruch 1, das Verfahren zur Herstellung dieses Schichtmaterials nach Anspruch 9 und die Verwendung des Schichtmaterials als bipolarer Separator und/oder mechanische Verstärkung von Gasdiffusionselektroden in PEM-Brennstoffzellen nach den Ansprüchen 21 und 22.

Die erste Aufgabe wird erfindungsgemäß gelöst durch ein Schichtmaterial bestehend aus Fasern, elektrisch leitfähigen Kohlenstoffpartikeln, die untereinander in hohem Ausmaß leitfähige Kontaktstellen besitzen und einem Polymer, das lediglich die Hohlraüme zwischen den Kohlenstoffpartikeln ganz oder teilweise füllt, ohne die Kontaktstellen zwischen den Kohlenstoffpartikeln wesentlich zu beeinträchtigen. Weiterhin enthält das Schichtmaterial meist einen Hilfsstoff, der bedingt durch spezielle Herstellungsverfahren im Schichtmaterial verbleibt.

Fasern mit hoher mechanischer Festigkeit und hohem E-Modul werden bevorzugt eingesetzt. Besonders bevorzugt werden Kohlefasern (carbonisiert) verwendet da sie hervorragende mechanische Eigenschaften und zumindest etwas elektrische Leitfähigkeit besitzen. Es ist von Vorteil wenn die Fasern eine Länge besitzen, die mindestens 30 Schichtdicken entspricht.
Als elektrisch leitfähige Kohlenstoffpartikel werden bevorzugt Leitruß,Graphit oder Mischungen daraus eingesetzt.
Um dem Schichtmaterial mechanische Festigkeit zu geben wird bevorzugt ein ausgehärtetes, duroplastisches Harz verwendet das die Kohlenstoffpartikel bzw. Agglomerate davon und die Fasern bindet. Besonders bevorzugt wird Phenolharz oder Epoxidharz verwendet.
Die Verwendung eines Hilfsstoffes ist durch eines der erfindungsgemäßen Herstellungsverfahren bedingt. Es wird bevorzugt Polytetrafluorethylen (PTFE) in Form feiner Partikel (ca. 120-500 nm) eingesetzt. Der Hilfsstoff PTFE verleiht dem Schichtmaterial einen ausgeprägt hydrophoben Charakter, der vor allem für die Anwendung des Schichtmaterials als mechanische Verstärkung von Gasdiffusionselektroden von Brennstoffzellen erwünscht ist.

Der Anteil an Fasern an der Gesamtmasse der Schicht beträgt bevorzugt 0-40%, der von Leitruß und/oder Graphit 10-75% und der Anteil des ausgehärteten Polymers liegt bei 10-70%. Bei einer Schicht mit großem offenen Porenvolumen liegt der Anteil an Polymer in der Nähe der unteren Grenze des angegebenen Bereichs.

Das Verfahren zur Herstellung des Schichtmaterials hat sicherzustellen, daß die Kohlenstoffpartikel und die Fasern schon vor der Zugabe des aushärtbaren Harzes in ausreichendem elektrischem Kontakt zueinander stehen. Das flüssige, noch nicht gehärtete Harz wird im erfindungsgemäßen Verfahren nicht, wie im Stand der Technik durch Mischen mit Kohlenstoffpulver und Fasern eingebracht, sondern durch imprägnieren eines schon vorgeformten, porösen Schichtmaterials enthaltend Kohlenstoffpartikeln und Fasern.
Die Poren des vorgeformten Schichtmaterials können somit ganz oder teilweise gefüllt werden, ohne die bereits bestehenden elektrischen Kontakte zwischen den elektrisch leitfähigen Partikeln wesentlich zu lösen. Bevorzugt werden die Poren des vorgeformten Schichtmaterials dadurch gefüllt, daß das flüssige Harz aufgrund der Kapillarwirkung in das Kohlenstoffmaterial eindringt. Ein Vorteil dieses Verfahrens besteht auch darin, daß Kohle- oder Glasfasern in ihrer ursprünglichen Länge erhalten bleiben und nicht durch einen Mischvorgang brechen.

Das vom vorgeformten Schichtmaterial aufgenommene Harz wird anschließend, bevorzugt unter Wärme und Druck, ausgehärtet. Der Druck kann im Rahmen eines kontinuierlichen Verfahrens mittels eines Kalanders durch beheizte Walzen oder diskontinuierlich durch eine Presse ausgeübt werden. Wird eine Strukturierung der Oberfläche, z.B. eine Kanalstruktur gewünscht, so kann ein Presswerkzeug entsprechend gestaltet werden, welches die Struktur während des Aushärtevorgangs in die Schicht einprägt.

Als vorgeformtes Schichtmaterial kann ein handelsübliches Kohlefaserpapier (Toray, Japan) oder, besonders bevorzugt, ein mit Ruß und/oder Graphitpulver und feinteiligem PTFE gefülltes Kohlefaservlies verwendet werden, das nach DE 195 44 323 oder EP 0298690 hergestellt wurde. Im einfachsten Fall besteht das vorgeformte Schichtmaterial nur aus den in Form einer Schicht gepressten Kohlenstoffkomponenten und evtl. einer geringen Menge eines Binders (z.B. PTFE). In vielen Fällen sind diese vorgeformten Schichtmaterialien allerdings nicht eigenstabil, d.h. sie müssen bis zur Weiterverarbeitung in der Pressform verbleiben.

Im Kohlefaserpapier (Toray, Japan) sind die Fasern bereits relativ fest durch Graphitierung eines Polymers gebunden. Allerdings sind die Fasern und die Bindung aufgrund der Graphitierung spröde, was sich in den mechanischen Eigenschaften des Endprodukts widerspiegelt. Weiterhin ist der Graphitierungsprozess kostenintensiv und daher nicht im Sinne der vorliegenden Erfindung.

Bei Verwendung des mit Ruß und/oder Graphit gefüllten Kohlefaservlieses als vorgeformtes Schichtmaterial dient PTFE zur vorläufigen Bindung der Kohlenstoffpartikel. Umhüllung der Kohlenstoffpartikel durch geringe Mengen PTFE ist nicht zu befürchten, da das PTFE während des gesamten Herstellungsprozesses als Feststoff vorliegt.

Erstaunlicherweise entsteht nach Anwendung des erfindungsgemäßen Verfahrens ein hartes, hochflexibles Schichtmaterial aus dem weichen, empfindlichen Ausgangsmaterial. Die Leitfähigkeit des Endprodukts ist nahezu identisch mit der Leitfähigkeit des Ausgangsmaterials.

### Beispiel 1:

Ein Vlies aus carbonisierten Kohlefasem mit einer flächenbezogenen Massendichte von 30 g/m² wird mit einer Suspension aus Ruß und PTFE nach Maßgabe von DE 195 44 323 mittels Walzen imprägniert. Als Suspensionsflüssigkeit wird Wasser und Isopropanol im Volumemverhältnis von ca. 1:1 verwendet. PTFE wird in Form kleiner Partikel mit Durchmesser von ca. 180 nm ebenfalls als wässrige Suspension eingesetzt. Der Anteil an PTFE, bezogen auf die Gesamtmasse aus Ruß und PTFE, kann 2-40% betragen. Speziell für dieses Beispiel wird ein 8 %-iger PTFE Anteil gewählt. Als Ruß kann Vulkan XC 72 oder Black Pearls der Firma Cabot oder bevorzugt Ketjenblack von Akzo Nobel verwendet werden.
Die flächenbezogene Massendichte des möglichst homogen imprägnierten und anschließend getrockneten Vlieses soll 50-150 g/m² betragen. Speziell für dieses Beispiel werden ca. 90 g/m² gewählt. Um die Dispersionsmittel aus der eingesetzten PTFE Suspension thermisch zu zersetzen, wird das imprägnierte Vlies bei ca. 350°C 5 min lang gesintert. Der für die Sinterung mögliche Temperaturbereich liegt zwischen 250°C und 400°C.
Um das vorgeformte Schichtmaterial zu erhalten, werden je nach gewünschter Schichtdicke ein oder mehrere imprägnierte Vliese bei evtl. erhöhter Temperatur verpresst. Die elektrischen Kontakte zwischen den Rußpartikeln werden zum Teil dadurch und auch durch den vorausgegangenen Walzprozess ausgebildet. Die Pressdrücke liegen zwischen 5 und 500 bar und die Temperatur sollte unter 400°C liegen. Speziell für dieses Beispiel wird 100 bar und 120°C gewählt. Dieses poröse Schichtmaterial ist zwar flexibel, besitzt jedoch geringe Elastizität und geringe mechanische Festigkeit.

Um nun das erfindungsgemäße Schichtmaterial zu erhalten, wird eine Lösung oder Suspension aus einem ein- oder zweikomponentigem Epoxidharz, hier speziell ein zweikomponentiges Epoxidharz mit einer Viskosität von etwa 1500 mPa s und einem Alkohol, hier speziell Ethanol hergestellt. Das Massenverhältnis aus den bereits vorgemischten Epoxidharzkomponenten und dem Alkohol beträgt etwa 1:1, um am Ende des Verfahrens eine gasdichte Schicht zu erhalten.
Das vorgeformte Schichtmaterial wird in die Suspension getaucht oder mit der Suspension besprüht oder bepinselt. Aufgrund der Kapillarkräfte zwischen vorgeformten Scichtmaterial und der Suspension dringt letztere über Schichtdicken von meist mehr als 1mm in das vorgeformte Schichtmaterial ein. Nachdem eine homogene Tränkung des Materials erreicht ist, wird der Alkohol bei leicht erhöhter Temperatur abgedampft. Diese Tränkung kann ein oder mehrmals wiederholt werden.
Anschließend wird das Epoxidharz bevorzugt unter Druck und erhöhter Temperatur ausgehärtet. Speziell in diesem Beispiel werden 120°C und 275 bar angewendet. Bei Verwendung von 3 imprägnierten Vliesschichten mit einer Masse von je 90 g/m² im vorgeformten Schichtmaterial erhält man ein erfindungsgemäßes Schichtmaterial von etwa 0.4 mm Dicke.

Das Schichtmaterial ist gasdicht und hydrophob. Der elektrische Widerstand parallel zur Schicht gemessen mit der Vierpunktmethode beträgt etwa 0.018 Ohm cm.
Als Maß für die Flexibilität kann das Verhältnis zwischen minimalen Biegedurchmesser D und Schichtstärke d betrachtet werden: Für das hier beschriebene Material wurde das Verhältnis D/d zu etwa 50 bestimmt.

### Beispiel 2:

Die Verwendung des erfindungsgemäßen Schichtmaterials nach Beispiel 1 als Bipolarplatte eines PEM-Brennstoffzellenstapels insbesondere für die Reaktionsgase Wasserstoff und Sauerstoff oder Luft kann auf zwei unterschiedliche Weisen erfolgen:
a) Man verwendet ein unstrukturiertes glattes Schichtmaterial als elektrisch leitfähige Gastrennschicht und legt die typischerweise erforderlichen Gas flow field Strukturen (z.B. eine Kanalstruktur evtl. in einem porösen Träger eingearbeitet) für Kathode und Anode auf die gegenüberliegenden Oberflächen des Schichtmaterials nach Beispiel 1 auf. Durch Stapeln von Gastrennschichten, flow fields und Membran-Elektroden Einheiten in der richtigen Reihenfolge und einer geeigneten Dichtungs- und Gaszufuhrtechnik erhält man einen PEM Brennstoffzellenstapel.
b) Man verwendet beim Pressen, insbesondere während der Aushärtephase des erfindungsgemäßen Schichtmaterials nach Beispiel 1 ein Presswerkzeug, das eine für ein Gas flow field geeignete (Negativ-) Struktur (z.B. eine Kanalstruktur) aufweist. Nach dem Aushärten erhält man ein Schichtmaterial das ein- oder beidseitig die Struktur des Werkzeugs trägt. Durch Stapeln und Dichten dieser so erhaltenen Gastrennschichten mit flow field Struktur mit Membran-Elektroden Einheiten erhält man einen PEM-Brennstoffzellenstapel.

### Beispiel 3:

Wie in Beispiel 1 wird ein Schichtmaterial bestehend aus Ruß, PTFE und einem Kohlefaservlies hergestellt. Zur Verfestigung der Schicht wird im Gegensatz zu Beispiel 1 eine 10 %-ige Lösung von Phenolharz in Isopropanol eingesetzt. Das vorgeformte Schichtmaterial wird zweimal mit dieser Lösung imprägniert und anschließend getrocknet. Nach Verpressen und gleichzeitigem Aushärten bei 160°C -180°C erhält man ein aufgrund des niedrigeren Polymergehaltes poröses Schichtmaterial. Es ist hydrophob und besitzt hohes Elastizitätsmodul. Das Porenvolumen läßt sich in weiten Grenzen durch Variation des Polymergehalts einstellen. Daher läßt sich dieses Schichtmaterial vorteilhaft als Verstärkungsschicht von Gasdiffusionselektroden einsetzen.

### Beispiel 4:

Das poröse, leitfähige Schichtmaterial nach Beispiel 3 kann vorteilhaft als mechanische Verstärkung von Gasdiffusionselektroden insbesondere von PEM-Brennstoffzellen eingesetzt werden. Häufig bestehen Gasdiffusionselektroden aus relativ weichen und empfindlichen Flächengebilden aus meist graphitierten Kohlefasem und Ruß. Der zum Zwecke der Erniedrigung des elektrischen Übergangswiderstands zwischen Elektrode und Bipolarplatte notwendige Anpreßdruck an die Kanalstruktur der Bipolarplatte verformt diese Elektroden. Dadurch kann die zwischen den Elektroden liegende meist sehr dünne Kunststoffmembran verletzt werden oder die Elektroden verschließen aufgrund der Verformung die Kanäle.
Durch Auflegen oder Aufpressen im gehärteten oder noch nicht gehärteten Zustand des erfindungsgemäßen Schichtmaterials nach Beispiel 3 (evtl. auch mit Epoxidharz gebunden) auf die Anode und/oder die Kathode können die erwähnten Nachteile aufgrund der mechanischen Verstärkung vermieden werden.

### Beispiel 5:

Als vorgeformtes Schichtmaterial kann auch ein handelsübliches Kohlefaserpapier (Fa. Toray) aus graphitierten Fasern verwendet werden. Die Imprägnierung kann mit unverdünntem Epoxidharz niedriger Viskosität erfolgen. Der Aushärtevorgang erfolgt bei nur geringen Drücken von etwa 1-80 bar und einer an das verwendete Epoxidharz angepaßten, erhöhten Temperatur. Die mechanische Stabilität und Flexibilität des Kohlefaserpapiers kann dadurch deutlich verbessert werden. Jedoch können die geringen Biegeradien aus Beispiel 1 aufgrund der geringen Reißdehnung der graphitierten Fasern bei weitem nicht erreicht werden.
Die elektrische Leitfähigkeit parallel zur Schichtebene wird durch den Imprägnierungsvorgang nicht beeinflußt.

### Beispiel 6:

Die Leitfähigkeit der Schichtmaterialien aus Beispiel 1, 3, 4 kann erhöht werden, in dem zur Herstellung des vorgeformten Schichtmaterials der Ruß durch eine Mischung aus Ruß und graphitierten Kohlenstoffen ersetzt wird. Als graphitierte Komponente eignet sich besonders graphitierte Kurzschnittfasern mit einer bevorzugten Länge von 10µm - 1mm und einem Durchmesser von bevorzugt 2µm - 20µm. Ein geeignetes Material sind z.B. die Fasern Donacarbo SG 241 der Fa. Ashland-Südchemie-Kernfest GmbH mit einer Länge von 0,13mm und einem Durchmesser von 13µm.

Der Massenanteil der graphitierten Komponente bezogen auf die Gesamtmasse an leitfähigem Material beträgt bevorzugt 10% - 75%. Der Anteil an PTFE kann im Vergleich zu Beispiel 1 auf etwa 3% - 5% zurückgenommen werden. Alle Verfahrensschritte können analog zu Beispiel 1 durchgeführt werden.

### Beispiel 7:

Insbesondere bei Verwendung des Schichtmaterials in Brennstoffzellen als Bipolarplatte oder zur Verstärkung der Gasdiffusionselektroden ist eine gute elektrische Leitfähigkeit senkrecht zur Schicht und ein niedriger Übergangswiderstand zu anderen elektrisch leitfähigen Materialien von Vorteil. Zur Absenkung der Übergangswiderstände (bei gegebenen Anpreßdruck) kann das Schichtmaterial bevorzugt vor Aushärten des Binders und besonders bevorzugt vor dem Imprägnieren mit Binder auf mindestens einer Oberfläche mit einem besonders gut elektrisch leitfähigen Material beschichtet werden. Bei mehrschichtigem Aufbau, wie in Beispiel 1 dargestellt, ist es auch vorteilhaft, Oberflächen die sich später im Schichtmaterial befinden zu beschichten.
Besonders geeignet ist eine Beschichtung enthaltend graphitierten Kohlenstoff insbesondere in Form von graphitierten Kohlenfasern. . Ein geeignetes Material sind z.B. die Fasern Donacarbo SG 241 der Ashland-Südchemie-Kernfest GmbH mit einer Länge von 0,13mm und einem Durchmesser von 13µm. Bevorzugt werden die Kohlenfasern suspendiert und durch Sprühen auf ein Schichtmaterial gemäß der vorliegenden Erfindung in einem Fertigungszustand vor der Imprägnierung mit Binder aufgebracht. Vorteilhaft ist die Verwendung eines Hilfsbinders der die Fasern aneinander und an das Schichtmaterial bindet, um sicherzustellen, daß keine Ablösung der Fasern in den weiteren Prozessschritten auftritt.
Spezielles Verfahren zur Herstellung einer Sprühsuspension:
- Mischung von Fasern Donacarbo SG 241 und 20 g H₂O durch leichtes Rühren
- Mischen von 0,42 g 60 %-iger PTFE Dispersion (z.B. TF 5032 von Fa. Dyneon) mit 10 g H₂O durch leichtes Rühren
- Mischen der beiden obigen Suspensionen
Bevorzugt werden durch Sprühen Feststoffmassenbelegungen von 0,2 - 5 mg/cm² aufgebracht. Nach Trocknen der Suspensionsflüssigkeiten ist ein Sinterprozeß analog Beispiel 1 aufgrund der Verwendung der PTFE Suspension als Hilfsbinder vorteilhaft. Die weiteren Verfahrensschritte können nun beginnend mit der Imprägnierung mit dem (Haupt-)Binder etwa nach Beispiel 1 ausgeführt werden.

## Patentansprüche

1. Elektrisch leitfähiges, flexibles und mechanisch stabiles Schichtmaterial enthaltend ein vorgeformtes, leitfähiges, poröses Schichtmaterial, welches Partikel aus Nichtmetallen als eine leitfähige Komponenten enthält,
**dadurch gekennzeichnet, daß**
die Poren des vorgeformten Schichtmaterials mit einem ausgehärteten Harz ganz oder teilweise gefüllt und die leitfähigen Partikel von diesem Harz nicht wesentlich umhüllt sind.

2. Elektrisch leitfähiges, flexibles und mechanisch stabiles Schichtmaterial nach Anspruch 1,
**dadurch gekennzeichnet, daß**
die leitfähige Komponente des vorgeformten Schichtmaterials aus Graphit und/oder Ruß besteht.

3. Elektrisch leitfähiges, flexibles und mechanisch stabiles Schichtmaterial nach einem der Ansprüche 1 bis 2,
**dadurch gekennzeichnet, daß**
das vorgeformte Schichtmaterial Fasern enthält.

4. Elektrisch leitfähiges, flexibles und mechanisch stabiles Schichtmaterial nach einem der Ansprüche 1 bis 3,
**dadurch gekennzeichnet, daß**
die Partikel des vorgeformten Schichtmaterials mittels Hilfsstoffen vorläufig gebunden sind.

5. Elektrisch leitfähiges, flexibles und mechanisch stabiles Schichtmaterial nach einem der Ansprüche 1bis 4,
**dadurch gekennzeichnet, daß**
das vorgeformte Schichtmaterial aus einer verdichteten Schüttung besteht.

6. Elektrisch leitfähiges, flexibles und mechanisch stabiles Schichtmaterial nach einem der Ansprüche 1 bis 4,
**dadurch gekennzeichnet, daß**
das vorgeformte Schichtmaterial aus ein oder mehreren mit Ruß und einem Binder imprägnierten Faservliesen besteht.

7. Elektrisch leitfähiges, flexibles und mechanisch stabiles Schichtmaterial nach einem der Ansprüche 1 bis 6,
**dadurch gekennzeichnet, daß**
das Harz ein Phenolharz oder ein Epoxidharz enthält.

8. Elektrisch leitfähiges, flexibles und mechanisch stabiles Schichtmaterial nach einem der Ansprüche 1 bis 7,
**dadurch gekennzeichnet, daß**
es Strukturen an mindestens einer der Oberflächen in Form von Erhebungen und Vertiefungen aufweist.

9. Verfahren zur Herstellung eines elektrisch leitfähigen, flexiblen und mechanisch stabilen Schichtmaterials enthaltend ein vorgeformtes, leitfähiges, poröses Schichtmaterial, welches Partikel aus Nichtmetallen als eine leitfähige Komponente enthält,
**dadurch gekennzeichnet, daß**
die Poren des vorgeformten Schichtmaterials mit einem aushärtbaren Harz ganz oder teilweise gefüllt und die leitfähigen Partikel von diesem Harz nicht wesentlich umhüllt werden.

10. Verfahren zur Herstellung eines elektrisch leitfähigen, flexiblen und mechanisch stabilen Schichtmaterials nach Anspruch 9,
**dadurch gekennzeichnet, daß**
die leifähige Komponente des vorgeformten Schichtmaterials aus Graphit und/oder Ruß besteht.

11. Verfahren zur Herstellung eines elektrisch leitfähigen, flexiblen und mechanisch stabilen Schichtmaterials nach einem der Ansprüche 9 bis 10,
**dadurch gekennzeichnet, daß**
das vorgeformte Schichtmaterial Fasern enthält.

12. Verfahren zur Herstellung eines elektrisch leitfähigen, flexiblen und mechanisch stabilen Schichtmaterials nach einem der Ansprüche 9 bis 11,
**dadurch gekennzeichnet, daß**
die Partikel des vorgeformten Schichtmaterials mittels Hilfsstoffen vorläufig gebunden werden.

13. Verfahren zur Herstellung eines elektrisch leitfähigen, flexiblen und mechanisch stabilen Schichtmaterials nach einem der Ansprüche 9 bis 12,
**dadurch gekennzeichnet, daß**
das vorgeformte Schichtmaterial aus einer verdichteten Schüttung besteht.

14. Verfahren zur Herstellung eines elektrisch leitfähigen, flexiblen und mechanisch stabilen Schichtmaterials nach einem der Ansprüche 9 bis 13,
**dadurch gekennzeichnet, daß**
das vorgeformte Schichtmaterial aus ein oder mehreren mit Ruß einem Binder imprägnierten und vorgepressten Faservliesen besteht.

15. Verfahren zur Herstellung eines elektrisch leitfähigen, flexiblen und mechanisch stabilen Schichtmaterials nach einem der Ansprüche 9 bis 14,
**dadurch gekennzeichnet, daß**
das Harz ein Phenolharz oder ein Epoxidharz enthält.

16. Verfahren zur Herstellung eines elektrisch leitfähigen, flexiblen und mechanisch stabilen Schichtmaterials nach einem der Ansprüche 9 bis 15,
**dadurch gekennzeichnet, daß**
das noch nicht ausgehärtete Harz mittels Kapillarwirkung in das vorgeformte Schichtmaterial eindringt.

17. Verfahren zur Herstellung eines elektrisch leitfähigen, flexiblen und mechanisch stabilen Schichtmaterials nach einem der Ansprüche 9 bis 16,
**dadurch gekennzeichnet, daß**
das noch nicht ausgehärtete Harz mittels Druck in die Poren des vorgeformten Schichtmaterials gepresst wird.

18. Verfahren zur Herstellung eines elektrisch leitfähigen, flexiblen und mechanisch stabilen Schichtmaterials nach einem der Ansprüche 9 bis 17,
**dadurch gekennzeichnet, daß**
das noch nicht ausgehärtete Harz vor dem Füllen des vorgeformten Schichtmaterials mittels einer Flüssigkeit verdünnt wird

19. Verfahren zur Herstellung eines elektrisch leitfähigen, flexiblen und mechanisch stabilen Schichtmaterials nach einem der Ansprüche 9 bis 18,
**dadurch gekennzeichnet, daß**
daß das Harz unter Druck und/oder erhöhter Temperatur ausgehärtet wird

20. Verfahren zur Herstellung eines elektrisch leitfähigen, flexiblen und mechanisch stabilen Schichtmaterials nach einem der Ansprüche 9 bis 19,
**dadurch gekennzeichnet, daß**
Strukturen in Form von Erhebungen und Vertiefungen an mindestens einer der Oberflächen durch Prägen zumindest während des Aushärtevorgangs erzeugt werden.

21. Verwendung des elektrisch leitfähigen flexiblen und mechanisch stabilen Schichtmaterials als Bipolarplatte von PEM-Brennstoffzellen.

22. Verwendung des elektrisch leitfähigen und mechanisch stabilen Schichtmaterials als mechanische Verstärkung für Gasdiffusionselektroden.

## Claims

1. Electrically conductive, flexible, and mechanically stable layer material containing a preformed, conductive, porous layer material, which contains non-metallic particles as a conductive component, **characterized in that** the pores of the preformed layer material are completely or partially filled with a cured resin, and the conductive particles are to an essential extent not coated with this resin.

2. Electrically conductive, flexible, and mechanically stable layer material in accordance with Claim 1, **characterized in that** the conductive components of the preformed layer material consists of graphite and/or soot.

3. Electrically conductive, flexible, and mechanically stable layer material in accordance with any of Claims 1 through 2, **characterized in that** the preformed layer material contains fibers.

4. Electrically conductive, flexible, and mechanically stable layer material in accordance with any of Claims 1 through 3, **characterized in that** the particles of the preformed layer material are bound together before processing via supplementary agents.

5. Electrically conductive, flexible, and mechanically stable layer material in accordance with any of Claims 1 through 4, **characterized in that** the preformed layer material is comprised of a compressed, packed material.

6. Electrically conductive, flexible, and mechanically stable layer material in accordance with any of Claims 1 through 4, **characterized in that** the preformed layer material is comprised of one or more nonwoven fiber mats impregnated with soot and a binder.

7. Electrically conductive, flexible, and mechanically stable layer material in accordance with any of Claims 1 through 6, **characterized in that** the resin contains a phenolic resin or an epoxy resin.

8. Electrically conductive, flexible, and mechanically stable layer material in accordance with any of Claims 1 through 7, **characterized in that** it contains structures in the form of projections and indentations on at least one of its surfaces.

9. Method for producing an electrically conductive, flexible, and mechanically stable layer material containing a preformed, conductive, porous layer material which contains non-metallic particles as a conductive component, **characterized in that** the pores of the preformed layer material are completely or partially filled with a curable resin, while the conductive particles are, to an essential extent, not coated with this resin.

10. Method for producing an electrically conductive, flexible, and mechanically stable layer material in accordance with Claim 9, **characterized in that** the conductive component of the preformed layer material consists of graphite and/or soot.

11. Method for producing an electrically conductive, flexible, and mechanically stable layer material in accordance with any of Claims 9 through 10, **characterized in that** the preformed layer material contains fibers.

12. Method for producing an electrically conductive, flexible, and mechanically stable layer material in accordance with one of Claims 9 through 11, **characterized in that** the particles of the preformed layer material are preliminarily bound together by means of supplementary agents.

13. Method for producing an electrically conductive, flexible, and mechanically stable layer material in accordance with any of Claims 9 through 12, **characterized in that** the preformed layer material is made of a compressed, packed material.

14. Method for producing an electrically conductive, flexible, and mechanically stable layer material in accordance with any of Claims 9 through 13, **characterized in that** the preformed layer material is comprised of one or more nonwoven fiber mats which are impregnated with soot and a binder and prepressed.

15. Method for producing an electrically conductive, flexible, and mechanically stable layer material in accordance with any of Claims 9 through 14, **characterized in that** the resin contains a phenolic resin or an epoxy resin.

16. Method for producing an electrically conductive, flexible, and mechanically stable layer material in accordance with any of Claims 9 through 15, **characterized in that** the still uncured resin penetrates the preformed layer material via capillary action.

17. Method for producing an electrically conductive, flexible, and mechanically stable layer material in accordance with any of Claims 9 through 16, **characterized in that** the still uncured resin is pressed into the pores of the preformed layer material by pressure.

18. Method for producing an electrically conductive, flexible, and mechanically stable layer material in accordance with any of Claims 9 through 17, **characterized in that** the still uncured resin is diluted with a liquid before the preformed layer material is filled.

19. Method for producing an electrically conductive, flexible, and mechanically stable layer material in accordance with any of Claims 9 through 18, **characterized in that** the resin is cured under pressure and/or increased temperature.

20. Method for producing an electrically conductive, flexible, and mechanically stable layer material in accordance with any of Claims 9 through 19, **characterized in that** structures in the form of projections and indentations are created on at least one of the surfaces via embossing, at least during the curing process.

21. Use of the electrically conductive and mechanically stable layer material as a bipolar plate of PEM fuel cells.

22. Use of the electrically conductive and mechanically stable layer material as mechanical reinforcement for gas diffusing electrodes.

## Revendications

1. Matériau stratifié électroconducteur, souple, et mécaniquement stable, contenant un matériau stratifié, poreux, conducteur, préformé, contenant des particules non métalliques comme composant conducteur, **caractérisé en ce que** les pores du matériau stratifié préformé sont remplis totalement ou partiellement d'une résine durcie et les particules conductrices ne sont pas enveloppées de façon importante par cette résine.

2. Matériau stratifié électroconducteur, souple, et mécaniquement stable selon la revendication 1, **caractérisé en ce que** les composants conducteurs du matériau stratifié préformé sont en graphite et/ou en noir de fumées.

3. Matériau stratifié électroconducteur, souple, et mécaniquement stable selon l'une des revendications 1 et 2, **caractérisé en ce que** le matériau stratifié préformé contient des fibres.

4. Matériau stratifié électroconducteur, souple, et mécaniquement stable selon l'une des revendications 1 à 3, **caractérisé en ce que** les particules du matériau stratifié préformé sont fixées provisoirement à l'aide de matières auxiliaires.

5. Matériau stratifié électroconducteur, souple, et mécaniquement stable selon l'une des revendications 1 à 4, **caractérisé en ce que** le matériau stratifié préformé est composé d'un produit en vrac compacté.

6. Matériau stratifié électroconducteur, souple, et mécaniquement stable selon l'une des revendications 1 à 4, **caractérisé en ce que** le matériau stratifié préformé est formé d'un ou plusieurs non-tissés de fibres imprégnées avec du noir de fumées et d'un liant.

7. Matériau stratifié électroconducteur, souple, et mécaniquement stable selon l'une des revendications 1 à 6, **caractérisé en ce que** la résine contient une résine phénolique ou une résine époxyde.

8. Matériau stratifié électroconducteur, souple, et mécaniquement stable selon l'une des revendications 1 à 7, **caractérisé en ce qu'**il comprend des structures au niveau d'au moins l'une des surfaces sous la forme de bossages et de cavités.

9. Procédé de fabrication d'un matériau stratifié électroconducteur, souple et mécaniquement stable contenant un matériau stratifié, poreux, conducteur, préformé, avec des particules non métalliques comme composant conducteur, **caractérisé en ce que** les pores du matériau stratifié préformé sont remplis partiellement ou totalement d'une résine durcissable et les particules conductrices ne sont pas enveloppées de façon importante par cette résine.

10. Procédé de fabrication d'un matériau stratifié électroconducteur souple et mécaniquement stable selon la revendication 9, **caractérisé en ce que** les composants conducteurs du matériau stratifié préformé comprennent du graphite et/ou du noir de fumées.

11. Procédé de fabrication d'un matériau stratifié électroconducteur souple et mécaniquement stable selon l'une des revendications 9 et 10, **caractérisé en ce que** le matériau stratifié préformé contient des fibres.

12. Procédé de fabrication d'un matériau stratifié électroconducteur souple et mécaniquement stable selon l'une des revendications 9 à 11, **caractérisé en ce que** les particules du matériau stratifié préformé sont liées provisoirement à l'aide de matières auxiliaires.

13. Procédé de fabrication d'un matériau stratifié électroconducteur souple et mécaniquement stable selon l'une des revendications 9 à 12, **caractérisé en ce que** le matériau stratifié préformé est un matériau en vrac comprimé.

14. Procédé de fabrication d'un matériau stratifié électroconducteur souple et mécaniquement stable selon l'une des revendications 9 à 13, **caractérisé en ce que** le matériau stratifié préformé est formé d'une ou plusieurs nappes de non-tissés de fibres imprégnées avec du noir de fumées et un liant et précomprimé.

15. Procédé de fabrication d'un matériau stratifié électroconducteur souple et mécaniquement stable selon l'une des revendications 9 à 14, **caractérisé en ce que** la résine contient une résine phénolique ou une résiné époxyde.

16. Procédé de fabrication d'un matériau stratifié électroconducteur souple et mécaniquement stable selon l'une des revendications 9 à 15, **caractérisé en ce que** la résine non encore durcie pénètre par effet capillaire dans le matériau stratifié préformé.

17. Procédé de fabrication d'un matériau stratifié électroconducteur souple et mécaniquement stable selon l'une des revendications 9 à 16, **caractérisé en ce que** la résine non durcie est pressée sous pression dans les pores du matériau stratifié préformé.

18. Procédé de fabrication d'un matériau stratifié électroconducteur souple et mécaniquement stable selon l'une des revendications 9 à 17, **caractérisé en ce que** la résine non encore durcie est diluée avec un liquide avant de charger le matériau stratifié préformé.

19. Procédé de fabrication d'un matériau stratifié électroconducteur souple et mécaniquement stable selon l'une des revendications 9 à 18, **caractérisé en ce que** la résine est durcie sous pression et/ou avec une élévation de température.

20. Procédé de fabrication d'un matériau stratifié électroconducteur souple et mécaniquement stable selon l'une des revendications 9 à 19, **caractérisé en ce que** des structures sous la forme de bossages et de cavités sont réalisées sur au moins l'une des surfaces par impression au moins pendant l'opération de durcissement.

21. Application d'un matériau stratifié électroconducteur, souple et mécaniquement stable comme plaque bipolaire de piles à combustible PEM.

22. Application du matériau stratifié électroconducteur et mécaniquement stable comme renforcement mécanique d'électrodes de diffusion de gaz.
